# EUROPÄISCHE PATENTANMELDUNG

(11) **EP 4 119 340 A1**
(43) Veröffentlichungstag der Anmeldung: **18.01.2023**
(21) Anmeldenummer: 22000017.8
(22) Anmeldetag: 20.01.2022
(51) Int. Cl.: B32B 7/027, B32B 1/00, B32B 1/02, B32B 5/02, B32B 5/20, B32B 5/24

(54) **HITZEFESTER BAUTEIL, VERFAHREN ZU DESSEN HERSTELLUNG UND BEHÄLTER**

(30) Priorität: 26.01.2021 AT 162021
(71) Anmelder: K P T GmbH, 4523 Neuzeug (AT)
(72) Erfinder: PFUSTERSCHMID, Johann, A-4431 Haidershofen (AT)
(74) Vertreter: Kovac, Werner

(57) **Zusammenfassung**

Hitzefester Bauteil besteht aus miteinander verbundenen Schichten, wovon eine ein Hartschaum und eine ein Keramikfaserpapier ist. Um hohe Formstabilität, Reißfestigkeit, Wärmeisolation, Feuerhemmung und elektrische Isolation zu erreichen, ist die Schicht (1) aus Keramikfaserpapier an der heißen Innenseite des Bauteils und nach außen darauffolgend die Schicht (2) aus Hartschaum, welcher die Schicht (1) aus Keramikfaserpapier in einem Teil seiner Schichtdicke durchsetzt, sodass eine Übergangszone (3) aus Faserpapier und Hartschaum besteht. Nach dem zugehörigen Verfahren hergestellte Bauteile sind insbesondere für die Verkleidung von und für Trennwände in elektrischen Akkumulatoren geeignet.

## Beschreibung

Die Erfindung betrifft hitzefeste Bauteile, die aus miteinander verbundenen Schichten bestehen, wovon eine ein Polyurethanschaum und eine ein Keramikfaserpapier ist. Der Bauteil kann beispielsweise die Hülle oder das Gehäuse eines Akkumulators in einem Kraftfahrzeug sein. Er soll möglichst leicht und fest sein, und für kürzere Zeit (einige Minuten oder bis zur Ankunft der Feuerwehr) Temperaturen von bis zu 1500 Grad Celsius standhalten.

Ein feuerfestes Paneel für die Umhüllung der stromführenden und stromspeichernden Bauteile eines Bootes ist aus der EP 3 632 787 A1 bekannt. Es ist, von außen zur Wärmequelle hin, gebildet aus einer Schaumschicht (4), einem feuerfesten Papier oder Gewebe und einem mit Glas imprägnierten Graphitgewebe. Die einzelnen Schichten sind miteinander verklebt. Abgesehen von dem Verkleben der Schichten, das die Herstellung geformter Bauteile erschwert und sich bei Hitzeeinwirkung löst, ist das mit Glas imprägnierte Graphitgewebe teuer und spröde, und nur schwer dreidimensional formbar. Außerdem ist es kein elektrischer Isolator und ein guter Wärmeleiter.

Aus der Veröffentlichung CN 1095 32 181 ist ein Isolations-Bauteil für mittlere und tiefe Temperaturen bekannt, der aus Keramikfaserpapier und beiderseits anliegenden Schichten aus einem einem Schaumstoff besteht, der von einer Hülle aus Aluminiumgeflecht umgeben ist. Aluminium schmilzt bei 660 ° C. Ein solcher Bauteil ist für hohe Temperaturen, wie sie beim Brand eines Stromspeichers auftreten, ungeeignet.

Die Veröffentlichungen EP 1 726 242 A1 und EP 1880 646 A1 handeln von einer Einrichtung zum Warmhalten von Speisen. In deren Unterteil ist ein Induktionskern untergebracht, der den Speisen Wärme bei relativ niederer Temperatur langsam zuführt.

Der Erfindung liegt die Aufgabe zugrunde, für hitzefeste Bauteile eine in der Fertigung einfache für beliebige Formen geeignete Schichtung vorzuschlagen, die formstabil, reißfest, hoch-wärmeisolierend, wasser- und staubdicht ist und obendrein gute elektrische Isolation bietet.

Erfindungsgemäß wird das dadurch erreicht, dass das Keramikfaserpapier an der "heißen" Innenseite ist und nach außen darauffolgend ein PU-Hartschaum, welcher das Keramikfaserpapier nur teilweise durchsetzt, sodass zwischen dem Keramikfaserpapier und dem Hartschaum eine Übergangszone besteht. So sind die beiden Schichten unlösbar miteinander verbunden, und widerstandsfähig gegenüber mechanischen und thermischen Einflüssen. Außerdem können sich durch die Einbettung keine Fasern lösen. Die Tiefe der Übergangszone ist durch die Dichte des Keramikfaserpapiers und den Füllungsgrad der Form einstellbar beziehungsweise variierbar.

Vorzugsweise ist der Polyurethanschaum ein Hartschaum und die Schicht ist in situ durch Aufbringen der flüssigen Komponenten Polyol und Isocyanat auf das Keramikfaserpapier hergestellt. Die Schicht aus Keramikfaserpapier ist vor Aufbringen der flüssigen Komponenten auf Schichten und Bauteile beliebiger Form aufbringbar, sogar drapierbar.

Das Keramikfaserpapier besteht vorzugsweise aus Silizium- und Aluminiumoxydfasern mit einer Dichte in dem Bereich zwischen 250 und 500 kg/m³. Es zeichnet sich durch beste Wärmeisolation, geringes Gewicht und geringe Wärmekapazität aus. Außerdem ist es auch ein elektrischer Isolator, wodurch im Brandfall Kurzschlüssen vorgebeugt ist. Handelsüblich sind solche Papiere mit einer Dichte von 180 bis 200 kg/m³, die durch Kompression - mechanisch oder durch den expandierenden Hartschaum - auf das gewünschte Maß erhöht wird. Dieses Maß beeinflusst die Eindringtiefe des Hartschaumes in das Keramikfaserpapier.

Manche Bauteile (zum Beispiel Zwischenwände in Batterieeinheiten) sind zwischen zwei möglichen Wärmequellen angeordnet. In solchen ist auf der dem Keramikfaserpapier abgewandten Seite der Schicht aus Hartschaum eine weitere Schicht aus Keramikfaserpapier angebracht und in der beschriebenen Weise mit der Schicht aus Hartschaum verbunden.

Für manche, insbesondere für größere Bauteile, reicht die Schicht aus Hartschaum für die gewünschte Festigkeit nicht aus. Für solche Bauteile kann in der Zone hinter dem Faserpapier, das ist die Schicht aus Hartschaum, eine Armierung vorgesehen sein. Zum Beispiel ein entsprechend vorgeformtes Metallgitter oder dergleichen. Dieses ist dann beim fertigen Bauteil in den Hartschaum eingeschlossen.

Schließlich gehört zur Ausführung der Erfinder ein Verfahren zur Herstellung der Bauteile, entweder in der Raumform des fertigen Bauteils oder als ebene Platten, aus denen der jeweilige Bauteil dann zusammengesetzt wird. In beiden Fällen wird eine verschließbare Form verwendet.

Zur Herstellung einer ebenen Platte ist die Form eine Wanne mit einem Flansch mit ebenem Boden und ebenem Deckel. Der ebene Boden der Form entspricht der "heißen" Seite der Platte. Entsprechend wird zuerst das Keramikfaserpapier in die Form eingelegt. Im Falle einer Raumform kann die Form eine Wanne oder ein erhabenes "Gebirge" sein, auf die das Keramikfaserpapier so drapierbar ist, dass es vollflächig aufliegt, da es nur aus losen Fasern besteht. Dann wird die Form mit dem Deckel verschlossen. Wenn eine zweite Schicht aus Keramikfaserpapier an der anderen Seite vorgesehen ist, wird diese in derselben Weise in den Formdeckel eingelegt.

Im zweiten Schritt werden die beiden Komponenten der Hartschaum-Schicht in flüssigem Zustand in den Hohlraum eingebracht. In dem nicht ganz befüllten Hohlraum kann sich der entstehende Hartschaum ausdehnen. Durch den Füllungsgrad kann die Härte des so gebildeten Hartschaums und, vor allem, die Eindringtiefe des Schaumes in die Schicht aus Keramikfaserpapier beeinflusst werden. Diese Übergangszone, in der der Hartschaum das Keramikfaserpapier verfestigt, ohne seine wärmedämmende Wirkung zu vermindern, ist ein wesentliches Merkmal der Erfindung.

In Weiterbildung des Verfahrens kann für Bauteile, auf deren beiden Seiten eine potentielle Hitzequelle ist, auch auf der "Rückseite" eine Schicht aus Keramikfaserpapier in derselben Weise und mit denselben Vorteilen hergestellt werden. Die Form besteht dann, wie die Schalen einer Muschel, aus zwei einerseits miteinander gelenkig verbundenen Formhälften.

Weiters bietet das Verfahren die Möglichkeit, eine Armierung so einzubauen, dass sie beiderseits vom Hartschaum umgeben ist. Für Bauteile mit hoher statischer Belastung ist so eine metallische Verstärkung möglich, ohne dass deren Wärmeleitfähigkeit sich nachteilig auswirkt.

Im Folgenden wird die Erfindung anhand von Abbildungen beschrieben. Es stellen dar:
Fig. 1: Einen ersten, ebenen, Bauteil, geschnitten,
Fig. 2: Einen zweiten Bauteil in einer Raumform, geschnitten
Fig. 3: Detail A in Fig. 2,
Fig. 4: Einen dritten, aus ersten Bauteilen zusammengesetzten Bauteil,
Fig. 5: Schnitt nach BB in Fig.4.

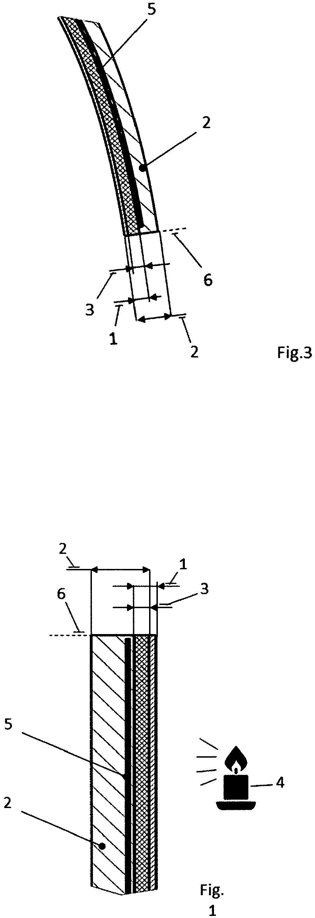

In **Fig.** 1 zeigt die Endzone des ersten Bauteils. Die Schicht aus Keramikfaserpapier ist mit 1, die Schicht aus Hartschaum ist mit 2 und der Bereich, in dem die beiden Schichten 1,2 einander durchdringen, ist mit 3 bezeichnet. Die nur aus Keramikfaserpapier bestehende Zone hat die Dicke der Zone 1 minus der der des Bereiches 3. Mit der Kerze 4 ist symbolisch angedeutet, wo die "heiße" Seite ist. Ein fallweise eingeschlossenes Metallgitter als Armierung ist mit 5 bezeichnet. Es kann ein Lochblech oder ein beliebig ausgebildeter Metallteil sein. Er reicht nicht ganz bis zur Endfläche 6, ist also rundum isoliert.

In einer vom Anmelder getesteten Ausführungsform ist die Schicht 1 ein Aluminium-Silikatfaser-Papier mit einer Dicke von 4 mm. Es besteht aus 50 % aus Al2O3, 49 % SiO2 und 0,5% Fe2O3 und 0,5 % Na2O und K2O.

Der Polyurethanschaum ist ein Hartschaum, gebildet aus einem Polyol und einem Isocyanat, hier in einem Verhältnis von 100:110. Mit diesen wird der Hohlraum zwischen den beiden Formteilen teilweise befüllt. Der Hartschaum bildet sich nach Vermischen der beiden flüssigen Komponenten in der geschlossenen Form.

Für den Test der tatsächlichen Ausführungsform des Bauteils wurde an der "heißen" Seite (Fig.1, Pos4) eine permanente Flammtemperatur von ca.2700°C aufgebracht, bei einer Umgebungstemperatur von 16°C. Dann wurde in verschiedenen Zeitabständen die an der gegenüberliegenden Fläche (Außenfläche des Hartschaums ohne Keramikfaserpapier, die Gesamtdicke des Bauteils beträgt 9mm.) die Temperatur gemessen, mit folgenden Werten:

| | |
|---|---|
| nach 20sec. | 19°C; |
| nach1 min | 32°C; |
| nach 2 min | 41°C; |
| nach 3 min | 72°C; |
| nach 5 min | 88°C |

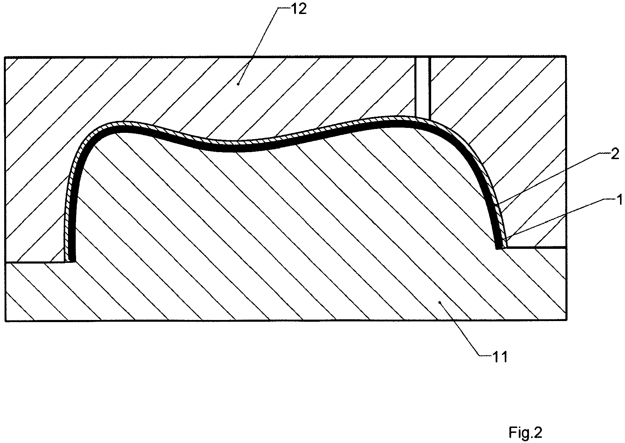

Der zweite Bauteil in **Fig. 2** ist eine Wanne 10, hier nur im Schnitt zu sehen. Die Schichtung ist, siehe Detail A in Fig. 3, identisch mit der der Fig. 1. Zur Illustration des Verfahrens ist eine Form 11 und ein Formdeckel 12 mit einer Füllöffnung 13 angedeutet. Das zuerst auf die Form 11 gelegte Keramikfaserpapier 1 ist in beiden ebenen Richtungen dehnbar, sodass es über oder in die Form 11 drapierbar ist. Der Formdeckel 12 schließt in einer Trennfuge 14 dicht an die Form 11 an. Wenn auf beiden Seiten der Schicht aus Hartschaum eine Schicht aus Keramikfaserpapier vorgesehen ist, so wird diese in den Formdeckel eingelegt.

Gemäß dem gegenständlichen Verfahren wird der Hohlraum in dem die Wanne 10 entsteht nur teilweise befüllt, zu etwa 60 %, sodass der sich bildende Hartschaum sich ausdehnen und in die Schicht aus Keramikfaserpapier 1 eindringen kann. So entsteht der Mischbereich 3. In den Hohlraum kann auch eine Armierung 5 eingelegt werden, bevor die Form geschlossen und befüllt wird.

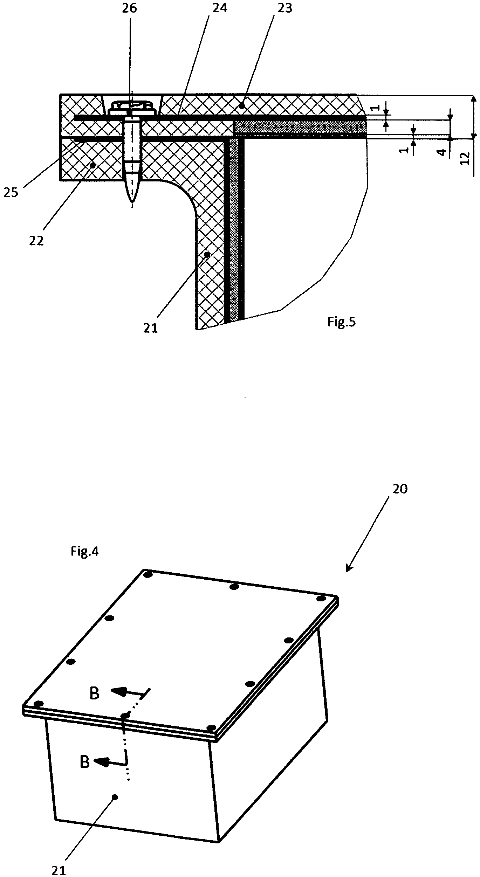

**Fig.** 4 zeigt als Anwendungsbeispiel einen Batteriekasten 20 als dritten Bauteil mit einem Teilschnitt, **Fig.** 5. Der Batteriekasten 20 besteht aus mehreren ebenen Bauteilen: Seitenwänden 21 mit Flansch 22 und einem Deckel 23. Die Wände sind Bauteile entsprechend der Fig. 1. Die Armierung 5 des Deckels 23 hat eine Verlängerung 24 in die Flanschzone. Die Armierung der Seitenwand ist in 25 abgekantet, sodass auch sie in den Flansch 22 ragt. Der Deckel 23 ist mittels der Schrauben 26 befestigt.

Insgesamt wird mit der Erfindung eine in der Fertigung einfache und für beliebige Formen geeignete Schichtung für einen Bauteil geschaffen, der formstabil, reißfest, hoch-wärmeisolierend, wasser- und staubdicht ist und obendrein gute elektrische Isolation bietet. So ist es ideal für die Herstellung von Verkleidungen und Zwischenwänden elektrischer Batterien.

## Patentansprüche

1. Hitzefester Bauteil, bestehend aus miteinander verbundenen Schichten, wovon eine ein Polyurethanschaum und eine ein Keramikfaserpapier ist, **dadurch gekennzeichnet, dass** die Schicht aus Keramikfaserpapier (1) an der heißen Innenseite des Bauteils angeordnet ist und nach außen darauf folgend eine Schicht aus einem harten Polyurethan (2), welches als Schaum das Keramikfaserpapier in einem Teil (3) seiner Schichtdicke (1) durchsetzt, sodass eine Übergangszone (3) aus Faserpapier und Hartschaum besteht.

2. Hitzefester Bauteil nach Anspruch 1, **dadurch gekennzeichnet, dass** der Polyurethanschaum ein Hartschaum ist und die Schicht (2) in situ durch Aufbringen der flüssigen Komponenten Polyol und Isocyanat auf die Schicht aus Keramikfaserpapier (1) hergestellt ist.

3. Hitzefester Bauteil nach Anspruch 1, **dadurch gekennzeichnet, dass** die Schicht aus Keramikfaserpapier (1) aus Silizium- und Aluminiumoxydfaser besteht und eine Dichte in dem Bereich zwischen 250 und 500 kg/m³ hat.

4. Hitzefester Bauteil nach Anspruch 1, **dadurch gekennzeichnet, dass** auf der der Schicht aus Keramikfaserpapier (1) abgewandten Seite der Schicht aus Hartschaum (2) eine weitere Schicht aus Keramikfaserpapier (nicht dargestellt) angebracht ist.

5. Hitzefester Bauteil nach Anspruch 1, **dadurch gekennzeichnet, dass** in die Schicht aus Hartschaum (2) in der Zone hinter dem Keramikfaserpapier (1) eine Armierung (5) enthält, die von dem Hartschaum zur Gänze umschlossen ist.

6. Hitzefester Bauteil nach Anspruch 1, **dadurch gekennzeichnet, dass** die Armierung (5) ein Metallgitter ist, dessen Form der des Bauteiles entspricht.

7. Verfahren zur Herstellung eines hitzefesten Bauteils, der eine Schicht aus einem Keramikfaserpapier (1) und eine Schicht aus einem Hartschaum (2), aufweist, in folgenden Schritten:
a. Das Keramikfaserpapier (1) wird in eine Form (11) eingelegt, die der Form des herzustellenden Bauteiles (10) entspricht.
b. Die Form (11) wird mit einem Formdeckel (12) geschlossen und der Hohlraum zwischen der Schicht aus Keramikfaserpapier (1) und dem Formdeckel (12) mit der Mischung der Komponenten der Hartschaum-schicht (2) teilweise befüllt.
c. Während des Aushärtens der Schicht aus Hartschaum (2) bleibt die Form (11,12) geschlossen.
d. Die Form (11,12) wird geöffnet und der fertige Bauteil (10) entnommen.

8. Verfahren nach Anspruch 7, **dadurch gekennzeichnet, dass** zwischen den Schritten a. und b. eine weitere Schicht aus Keramikfaserpapier (nicht dargestellt) in den Formdeckel (12) eingelegt wird.

9. Verfahren nach Anspruch 7, **dadurch gekennzeichnet, dass** zwischen Schritt a) und Schritt b) eine Armierung (5) der dem fertigen Bauteil (10) entsprechenden Form eingelegt wird.

10. Behälter für einen Stromspeicher beziehungsweise Teile dessen, der/die aus Bauteilen nach Anspruch 1 besteht, die nach Anspruch 7 hergestellt sind.
